(19) **Europäisches Patentamt**

**European Patent Office**

**Office européen des brevets**

(11) Veröffentlichungsnummer: **0 076 334**
**B1**

(12) **EUROPÄISCHE PATENTSCHRIFT**

(45) Veröffentlichungstag der Patentschrift:
**29.01.86**

(51) Int. Cl.⁴: **B 61 H 15/00**

(21) Anmeldenummer: **81107798.1**

(22) Anmeldetag: **01.10.81**

(54) **Nachstelleinrichtung für das Bremsgestänge von Schienenfahrzeugen.**

(43) Veröffentlichungstag der Anmeldung:
**13.04.83 Patentblatt 83/15**

(45) Bekanntmachung des Hinweises auf die Patenterteilung:
**29.01.86 Patentblatt 86/5**

(84) Benannte Vertragsstaaten:
**CH DE FR IT LI SE**

(56) Entgegenhaltungen:
**DE - A - 2 937 752**
**SE - B - 386 629**
**US - A - 3 624 766**

(73) Patentinhaber: **KNORR-BREMSE AG, Moosacher Strasse 80, D-8000 München 40 (DE)**

(72) Erfinder: **Sander, Nils Börje Lennart, Torpslingan 3, S-28 300 Osby (SE)**

## Beschreibung

Die Erfindung betrifft eine Bremseinrichtung nach dem Gattungsbegriff des Patentanspruches 1.

Bremseinheiten der gattungsgemässen Art sind z. B. in der schwedischen Patentschrift 386 629 bzw. der US-A-4 136 760 beschrieben. Derartige Bremseinheiten besitzen den Nachteil, dass sich ihr Spielnachsteller primär an der entfernt vom Bremsklotz befindlichen Seite des Bremshebels erstreckt und einen Anschlagkörper aufweist, der sich auch an der entgegengesetzt zu Position der Bremsklötze befindlichen Seite des aktiven Bremshebels befindet. Als Folge davon sind derartige Nachstelleinrichtungen in erhöhtem Mass der Gefahr äusserer Zerstörung ausgesetzt und erfordern einen grösseren Einbauraum.

Die US-A-3 624 766 zeigt eine gattungsfremde Bremseinrichtung, bei welcher die Nachstelleinrichtung zwischen dem vorlaufenden Bremshebel und dem diesem zugeordneten Bremsklotz angeordnet ist. Die Nachstelleinrichtung überragt dabei ungeschützt den vorlaufenden Bremshebel auf der radabgewandten Seite ebenso wie die zur Betätigung des Bremshebels erforderliche Kolbenzylindereinheit, wodurch ein grosser Einbauraum erforderlich ist. Die Nachstelleinrichtung weist hierbei ein am vorlaufenden Bremshebel angelenktes Rohr auf, dessen radseitiges Ende zwei einander zugewandte Kupplungs-Schulterflächen trägt, zwischen welche zwei Schulterflächen eines starr mit einer Mutter verbundenen Flansches eingreifen.

Davon ausgehend besteht die Aufgabe der Erfindung darin, eine Bremseinrichtung der eingangs genannten Art mit einer Spiel-Nachstelleinrichtung zu schaffen, welche vollständig geschützt und einbauraumsparend angeordnet werden kann. Es soll auch eine Bremseinheit mit einem Spielnachsteller doppeltwirkender Art geschaffen werden, bei welchem die Nachstellung direkt während des Anlegehubes der Bremse vollzogen wird.

Die Lösung dieser Aufgabe besteht aus den kennzeichnenden Merkmalen des Patentanspruches 1.

Die Erfindung ist nachfolgend anhand eines Ausführungsbeispiels unter Bezugnahme auf die beigefügte Zeichnung erläutert.

Fig. 1 ist eine schematische Darstellung einer Bremsklotz-Bremsgestängeeinheit;

Fig. 2 gibt einen Teil der Bremseinheit nach der Erfindung wieder;

Fig. 3 ist eine axiale Schnittansicht eines Teiles einer erfindungsgemässen Bremseinheit unter Darstellung der Spielnachstelleinrichtung.

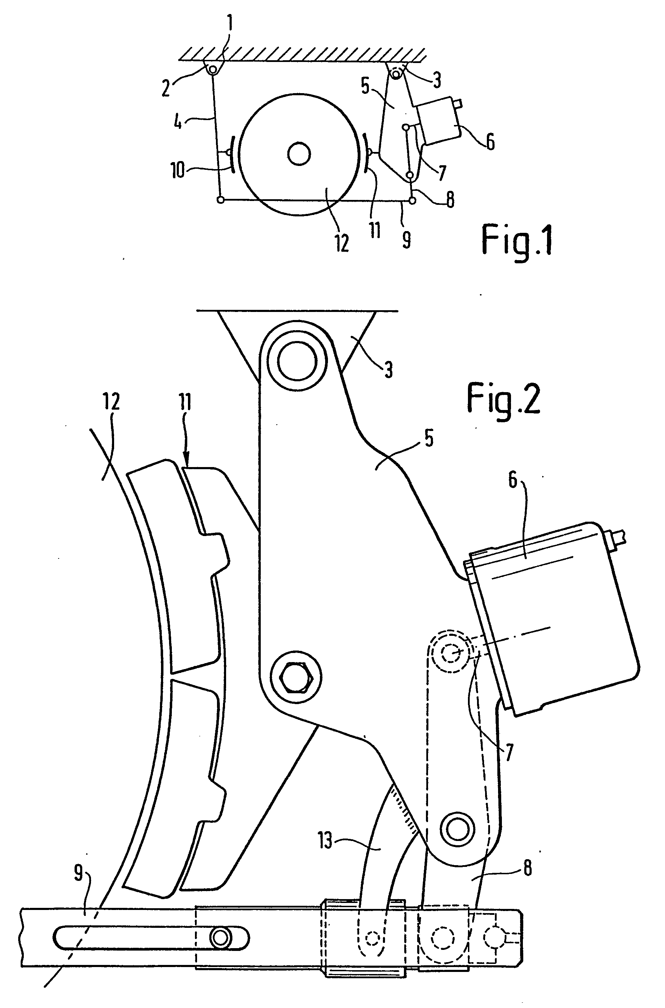

In Fig. 1 ist ein Teil eines Fahrzeugrahmens 1 dargestellt, an welchem Streben 2 und 3 angebracht sind. Die Streben tragen schwenkbar angelenkte Hebel 4 und 5. Der Hebel 5 trägt einen Zylinder 6 mit einem (nicht dargestellten) Kolben, von welchem sich eine Kolbenstange 7 erstreckt. Das Aussenende der Kolbenstange 7 ist schwenkbar mit einem Hebel 8 verbunden, der zwischen seinen Enden drehbar am Hebel 5 angelenkt ist. Das von der Kolbenstange 7 entfernt liegende Ende des Hebels 8 ist verschwenkbar mit einer Zugstange 9 verbunden, welche auch verschwenkbar mit dem unteren Ende des Hebels 4 in Verbindung steht. Bremsbacken bzw. Bremsklötze 10 und 11 liegen an einem Rad 12 an und sind jeweils schwenkbar mit den Hebeln 4 und 5 in Verbindung.

Die an sich bekannte Vorrichtung nach Fig. 1 arbeitet wie folgt:

Bei Betätigung der Zylinder-Kolbeneinheit wird die Kolbenstange 7 ausgefahren und dreht dadurch den Hebel 8 gemäss Darstellung gegen den Uhrzeigersinn gerichtet um seine Schwenkverbindung am Hebel 5. Dies hat zur Folge, dass die Zugstange 9 gemäss Fig. 1 nach rechts gerichtet gezogen wird und der Bremsklotz 10 mit der Lauffläche des Rades 12 in Berührung gelangt. Gleichzeitig bewegt sich der Hebel 5 im Uhrzeigersinn gerichtet, so dass der Bremsklotz 11 mit der Lauffläche des Rades 12 in Berührung gelangt.

Der Verschleiss an der Bremsfläche — d. h. der Verschleiss an den Bremsklötzen 10 und 11 und am Rad 12 — kann kompensiert bzw. ausgeglichen werden, indem man die Länge der Teile der die Bremskraft übertragenden Einrichtung verstellt, so z. B. indem die Länge der Kolbenstange 7 verlängert oder die Baulänge der Zugstange 9 reduziert wird. Diese Einstellung kann manuell oder automatisch durchgeführt werden, wobei beide Einstellmöglichkeiten bekannt sind.

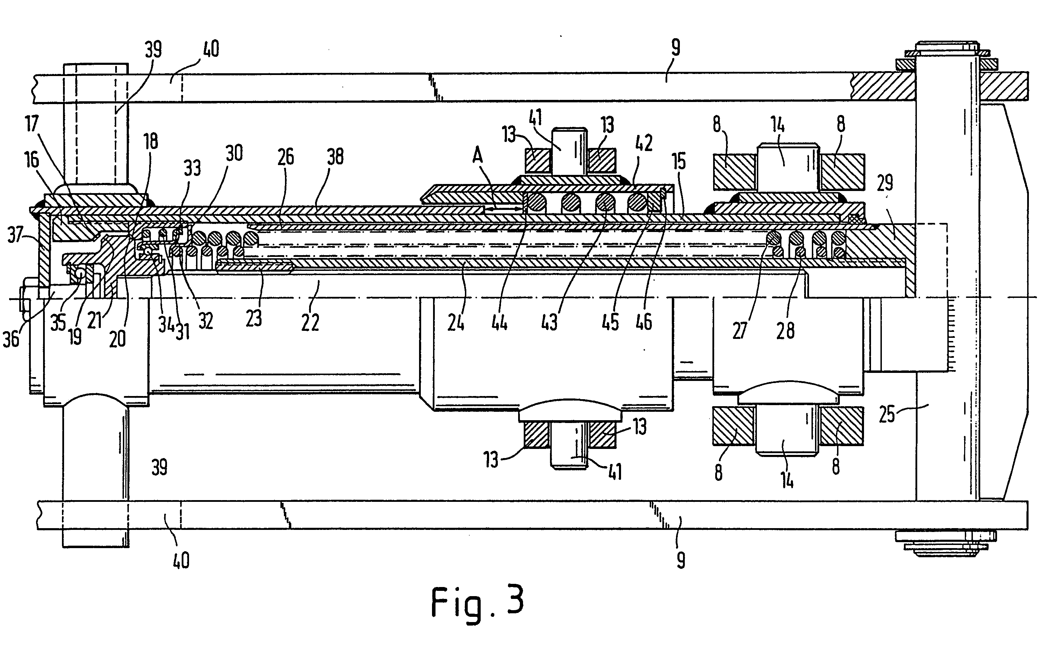

Fig. 2 ist eine Seitenansicht einer erfindungsgemässen Bremseinheit, wobei nur die Teile im Bereich der Zylinder-Kolbeneinheit und ein automatischer Spielnachsteller in der Zugstange wiedergegeben sind. Die bereits unter Bezugnahme auf Fig. 1 erläuterten Teile weisen entsprechende Bezugsbezeichnungen auf. In Fig. 2 ist die Verwendung eines verhältnismässig kleinen Zylinders 6 wiedergegeben, wodurch ein hohes Hebelverhältnis bei der Übertragung der Bremskraft erforderlich ist und eine während des Bremsens verlässlich funktionierende Spielnachstelleinrichtung benötigt wird. In Fig. 2 ist die Verwendung eines Anschlagkörpers 13 dargestellt. Der Anschlagkörper 13 befindet sich an der Radseite des «aktiven» Bremshebels 5. Die Teile der Nachstelleinrichtung befinden sich alle links bezüglich des Hebels 8, welcher durch die Zylinder-Kolbeneinheit betätigbar ist. Die Einzelheiten der Nachstelleinrichtung sind in Fig. 3 dargestellt.

Der durch die Zylinder-Kolbeneinheit betätigte Hebel 8 ist verschwenkbar an zwei diametral einander gegenüberliegenden Zapfen 14 angelenkt, die starr an einem Ende eines Rohrs 15 angebracht sind. Das andere Ende des Rohrs ist mit einer inneren Hülse 16 starr verbunden. Die Hülse ist mit nach innen gerichteten, axialen Abstand aufweisenden Schulterflächen ausgestattet, welche als Kupplungsflächen 17 und 18 wirken. Die Kupplungsflächen 19 und 20 eines Flansches 21 zusammen, der starr an einer Gewindespindel 22 angebracht ist. Die Gewindespindel weist nichtselbsthemmende Gewindegänge auf und trägt eine Mutter 23. Die Mutter ist von einem Rohr 24 getragen, welches die Gewindespindel 22 umgibt und sich gemäss Fig. 3 relativ zur Mutter 23 nach rechts erstreckt. Das von der Mutter 23 entfernt liegende Ende des Rohrs 24 ist starr an einem Bolzen 25 befestigt, welcher seinerseits schwenkbar an der Zugstange 9 angebracht ist. Die Zugstange 9 weist zwei parallele Zugstangenkörper auf, die sich an beiden Seiten des Rads erstrecken. Ein schützendes Rohr 26 ist starr am rechten Ende des Rohrs 24 angebracht; in einem Zwischenraum zwischen dem Rohr 26 und dem Rohr 24 sind zwei schraubenförmig gewickelte Federn 27 und 28 vorgesehen. Die Federn sind zwischen einer Schulterfläche eines das Rohr 26 und das Rohr 24 verbindenden Elements 29 und einem axial beweglichen Federlager 30 vorgespannt angeordnet. Das Federlager 30 stützt sich an einer Schulterfläche der Hülse 16 ab. Eine weitere schraubenförmig gelegte Feder 31 ist vorgespannt zwischen einer Schulterfläche der Hülse 16 und einem Federlager 32 angebracht. Das Federlager 32 stützt sich an einem Sicherungsring 33 in der Hülse 16 ab. Ein Wälzlager 34 ist zwischen dem Federlager 32 und einer zylindrischen Fläche des Flansches 21 vorgesehen. Ein weiteres Kugel- bzw. Wälzlager 35 ist zwischen einem Teil des Flansches 21 und einem axialen Anschlagkörper 36 vorgesehen. Der Anschlagkörper 36 ist an einem Boden 37 eines Rohrs 38 befestigt, welcher das Rohr 15 umgibt. Das Rohr 38 trägt zwei Bolzen 39, welche in Schlitzen 40 der die Zugstange 9 bildenden Zugstangenkörper geführt sind.

Der Anschlagkörper 13 nach Fig. 3 ist gemäss Fig. 2 von entgegengesetzt sich erstreckend angeordneten Zapfen 41 geführt, welche eine Schwenkverbindung mit einer Hülse 42 vermitteln. Die Hülse 42 umgibt das Rohr 15. Eine starke, schraubenförmig gelegte Feder 43 ist vorgespannt zwischen einem Ring 44 und einem weiteren Ring 45 vorgesehen. Der Ring 44 ist starr mit der Hülse 42 verbunden, während der Ring 45 beweglich angeordnet ist und an einem Sicherungsring 46 anliegt.

Der axiale Abstand zwischen den einander gegenüberliegenden Endschulterflächen des Rohrs 38 und des Rings 44 ist mit A bezeichnet.

Die Nachstellfunktion der Bremseinrichtung ist wie folgt:

Normales Spiel des Bremsgestänges: Bei Anlegen der Bremse wird die Kolbenstange 7 ausgefahren und bewegt den Hebel 8 gegen den Uhrzeigersinn gerichtet, d. h. dass sich das untere, mit den Zapfen 14 verbundene Ende des Hebels 8 gemäss Fig. 2 und 3 nach rechts gerichtet verlagert. Die Bremskraft wird über das Rohr 15, die Hülse 16, das Federlager 30, die Federn 27 und 28, das Element 29 und den mit der Zugstange 9 verbundenen Bolzen 25 übertragen.

Wenn sich das Bremsgestänge in Bremsanlegerichtung bewegt, dann wird der Abstand A kleiner, wobei normales Spiel im Bremsgestänge zur Folge hat, dass der Abstand A in dem Moment verbraucht ist bzw. verschwindet, wenn die Bremsklötze die Lauffläche des Rads berühren.

Durch die Kraft der Federn 27, 28 besitzen diese die Neigung, die Gewindespindel 22 axial gerichtet aus dem Rohr 24 zu bewegen. Das Rohr 24 wird durch seine Verbindung mit dem Bolzen 25 an einer Drehung gehindert. Die Gewindespindel 22 kann sich nur axial gerichtet bewegen, wenn diese Drehung ermöglicht ist. Die Kraft der zwei Federn 27 und 28 wird jedoch über die Kupplungsflächen 18, 20 übertragen, wodurch diese Drehung unterbunden ist. Die Kraft der Federn 27, 28 wird über das Federlager 30, die Hülse, den Flansch 21, die Gewindespindel 22, die Mutter 23, das Rohr 24 und das Element 29 zurück zu den Federn 27, 28 übertragen.

Sobald die Bremsklötze die Lauffläche des Rades berührt haben, wird die im Bremsgestänge übertragene Kraft schnell zunehmen und wird bald der Summe der Kräfte der Federn 27 und 28 entsprechen. Gleichzeitig ist der Abstand A verbraucht und eine weitere Axialbewegung des Rohres 15 kann nunmehr stattfinden, während das Rohr 38 stationär verbleibt. Die Kupplungsflächen 18, 20 werden gelöst und die Kupplungsflächen 17, 19 kommen infolge der axialen Verbindung zwischen dem Flansch 21 und dem Rohr 38 in gegenseitigen Eingriff. Während der relativen Versetzung des Flansches 21 und der Hülse 16 besteht keine Neigung, dass sich die Gewindespindel 22 dreht, da die Kraft der Federn 27, 28 durch die übertragene Bremskraft ausgeglichen ist. Eine weitere, nach rechts gerichtete Bewegung des Rohres 15 (gemäss Fig. 3) wird ausgeübt, wenn die übertragene Bremskraft ausreicht, die durch die Feder 43 gegenüber dieser Bewegung des Rohrs 38 ausgeübten Widerstand zu überwinden.

Während des nachfolgenden Lösens der Bremse führen alle vorgenannten Teile Bewegungen in entgegengesetzter Reihenfolge aus.

Bremsen mit zu starkem Spiel im Bremsgestänge:

Während des Anlegens der Bremse wird der Abstand A zu einem Moment verbraucht, wenn die übertragene Bremskraft beträchtlich kleiner ist als die Kraft der Federn 27, 28. Wenn jedoch die übertragene Bremskraft die Kraft der Feder 31 (welche verhältnismässig schwach sein kann) übersteigt, dann kann die nach rechts gerichtete Bewegung des Rohrs 15 weitergehen, weil das Rohr 38 stationär verbleibt. Die Feder 31 wird nunmehr zusammengedrückt, während der Flansch 21 in seiner Axialposition gehalten bleibt. Die Kupplungsflächen 18, 20 sind nunmehr gelöst, jedoch kann die Kraft der Federn 27, 28 (nicht vollständig durch die übertragene Bremskraft ausgeglichen) nunmehr ein axiales Ausfahren der Gewindespindel 22 mit dem Rohr 24 hervorrufen. Die über die Mutter 23 übertragene Federkraft verursacht ein Drehmoment an der Gewindespindel 22, welche frei ist, sich zu drehen, solange beide Kupplungsflächen 17, 19 und 18, 20 gegenseitig offene Lage besitzen. So wird die Gewindespindel 22 aus dem Rohr 24 herausgeschraubt, bis die Bremsklötze an der Lauffläche des Rades angelegt sind und die Bremskraft bis zu einem Wert ansteigt, welche die Kraft der Federn 27, 28 übersteigt. Das Spiel im Bremsgestänge ist nunmehr auf den korrekten Wert eingestellt; der übrige Teil des Bremshubes wird ausgeführt, wie dies unter Bezugnahme auf den Eingriff der Kupplungsflächen 17, 19 vorstehend erwähnt wurde.

Das Lösen der Bremse vollzieht sich in gleicher Weise wie im Falle normalen Spiels.

Unzureichendes Spiel im Bremsgestänge:

Während des Anlegens der Bremse steigt die Bremskraft bis zu einem Wert an, welcher die Kraft der Federn 27, 28 übersteigt, bevor der Abstand A verbraucht ist, da ein vorzeitiges Anliegen der Bremsklötze an der Lauffläche des Rades vorliegt. Infolge der Bremskraftübertragung durch die Federn 27, 28 werden diese zusammengedrückt, so dass sich das Rohr 15 zusammen mit der Hülse 16 relativ zur Gewindespindel 22 und zum Flansch 21 nach rechts gerichtet bewegt. Die Feder 31 wird auch zusammengedrückt und die Kupplung 18, 20 wird geöffnet. Die Gewindespindel 22 ist nun frei, sich zu drehen, wobei eine weitere, nach rechts gerichtete Bewegung des Rohrs 15 zur Folge hat, dass das Federlager 32 das Wälzlager 34 axial nach rechts gerichtet bewegt. Auf diese Weise nehmen der Flansch 31 und die Gewindespindel 22 bei Drehung an dieser axialen Bewegung teil, so dass die Gewindespindel in das Rohr 24 hineingeschraubt wird. Die gesamte Axiallänge der Gewindespindel 22 und des Rohres 24 ist nunmehr reduziert; diese Bewegungen werden fortgeführt, bis der Abstand A erschöpft bzw. aufgebraucht ist, derart, dass die Kupplungsflächen 17, 19 miteinander in Eingriff gelangen. Das Spiel im Übertragungssystem ist nunmehr auf dem normalen Wert erhöht worden, so dass der übrige Teil der Bremsbetätigung so abläuft, wie dies vorstehend unter Bezugnahme auf normales Spiel erläutert ist.

**Patentansprüche**

1. Bremseinrichtung für Schienenfahrzeuge, mit einer Bremsklotz-Gestängeanordnung für ein Rad (12) des Schienenfahrzeuges, wobei die Gestängeanordnung einen direkten bzw. vorlaufenden Bremshebel (5) und einen indirekten bzw. nachlaufenden Bremshebel (4) umfasst, die durch eine Zugstange (9) miteinander verbunden sind, mit an den Bremshebeln angeordneten Bremsklötzen (10, 11), mit einer Zylinder-Kolbeneinheit (6, 7), welche den vorlaufenden Bremshebel (5) betätigt, um die Bremsklötze (10, 11) an das abzubremsende Rad (12) anzulegen, während eine Zugkraft jeweils durch die Zugstange (9) übertragen wird, mit einer in der Zugstange (9) auf Seiten des vorlaufenden Bremshebels (5) seitlich des Rades (12) angeordneten Nachstelleinrichtung, welche den Abstand zwischen den Bremshebeln in Abhängigkeit vom Verschleiss an den Bremsklötzen (10, 11) und am Rad (12) kürzt, um ein konstantes Spiel in der Bremseinheit in deren vollständig gelösten Position aufrecht zu erhalten, wobei die Nachstelleinrichtung zwei teleskopartig verlagerbare Stangenteile (22, 24) umfasst, von welchen eines eine Gewindespindel (22) mit nicht-selbsthemmendem Gewinde ist, während das andere Stangenteil ein Rohr (24) ist, welches eine auf die Gewindespindel (22) aufgeschraubte Mutter (23) trägt, dadurch gekennzeichnet, dass die Nachstelleinrichtung im wesentlichen zwischen dem vorlaufenden Bremshebel (5) und dem Rad (12) angeordnet ist, dass der vorlaufende Bremshebel (5) an einem Ende eines Rohres (15) befestigt ist, dessen anderes Ende zwei kuppelbare Schulterflächen (17, 18) trägt, wobei die Schulterflächen wahlweise mit zwei entsprechenden Schulterflächen (19, 20) eines starr mit der Gewindespindel (22) verbundenen Flansches (21) kuppelbar sind, dass sich das die Mutter (23) tragende Rohr in vom Flansch (21) abgewandter Richtung erstreckt und am vom Flansch (21) entfernten Ende mit der Zugstange (9) verbunden ist, dass ein bewegbarer Anschlagkörper (13) am Rohr (15) angebracht ist und dieses in einer Axialposition zwischen dem vorlaufenden Bremshebel (5) und dem Flansch (21) umgibt, und dass der Anschlagkörper (13) mit einem axial durch die Gewindespindel (22) bewegbaren Körper (38) in Eingriff bringbar ist, um eine Feder (27, 28), welche die Gewindespindel und das Rohr (24) in dieser relativen Axialrichtung bewegen, zu lösen, derart, dass eine Zunahme ihrer Gesamtlänge stattfindet.

2. Bremseinrichtung nach Anspruch 1, dadurch gekennzeichnet, dass der Zylinder (6) starr am Bremshebel (5) befestigt ist, dass der Kolben im Zylinder (6) und die Zugstange (9) mittels eines Hebels (8) verbunden sind, welche schwenkbar an den Bremshebel (5) angeschlossen ist, dass das Ende des schwenkbar an den Bremshebel (5) angeschlossenen Hebels (8) schwenkbar mit dem die zwei kuppelbaren Schulterflächen (17, 18) enthaltenden Rohr (15) verbunden ist, und dass der bewegbare Anschlagkörper (13) starr mit dem vorlaufenden Bremshebel (5) in Verbindung steht.

**Claims**

1. Braking device for rail vehicles, comprising a brake block rigging arrangement for a wheel (12) of the rail vehicle, the rigging arrangement having a direct or leading brake lever (5) and a indirect or trailing brake lever (4), which levers are joined together by a pull-rod (9); comprising brake blocks (10, 11) arranged on the brake levers; comprising a cylinder piston unit (6, 7) which actuates the leading brake lever (5) to apply the brake blocks (10, 11) to the wheel (12) for braking, while pull is transmitted each time by the pull-rod (9); comprising a slack adjuster which is arranged in the pull-rod (9) at the same side as the leading brake lever (5) to one side of the wheel (12) and which shortens the distance between the brake levers according to the wear on the brake blocks (10, 11) and on the wheel (12) so as to maintain constant clearance in the braking unit at its fully released position, the slack adjuster having two telescopically movable rod parts (22, 24), one of which is a threaded spindle (22) with a non-self-locking thread while the other rod part is a tube (24) which carries a nut (23) screwed onto the threaded spindle (22), wherein the slack adjuster is arranged essentially between the leading brake lever (5) and the wheel (12), wherein the leading brake lever (5) is fastened to one end of a tube (15) whose other end carries two engageable shoulder faces (17, 18) which can engage alternately with two matching shoulder faces (19, 20) of a flange (21) joined rigidly to the threaded spindle (22), wherein the tube bearing the nut (23) extends in the direction facing away from the flange (21) and is joined to the pull-rod (9) at the end away from the flange (21), wherein a movable stop body (13) is attached to the tube (15) and encompasses it at an axial position between the leading brake lever (5) and the flange (21), and wherein the stop body (13) is capable of engaging a body (38) which can be moved axially by the threaded spindle (22) so that a spring (27, 28) which is moved by the threaded spindle and the tube (24) in the relative axial direction is released in such a way that the overall length of the spring increases.

2. Braking device as defined in claim 1, wherein the cylinder (6) is fastened rigidly to the brake lever (5), wherein the piston in the cylinder (6) and the pull-rod (9) are joined by means of a lever (8) which is connected pivotably to the brake lever (5), wherein the end of the lever (8) which is connected pivotably to the brake lever (5) is joined pivotably to the tube (15) containing the two engageable shoulder faces (17, 18), and wherein the movable stop body (13) is joined rigidly to the leading brake lever (5).

### Revendications

1. Installation de freinage pour des véhicules sur rails, avec une timonerie de sabots de frein pour une roue (12) d'un véhicule sur rails, du type dans laquelle la timonerie comporte un levier de freinage direct ou avançant (5) et un levier indirect ou suiveur (4) qui sont reliés par une barre de traction (9), avec des sabots de frein (10, 11) disposés sur les leviers de freinage, avec une unité à cylindre et à piston (6, 7) qui commande le levier direct (5) en vue d'appliquer les sabots de frein (10, 11) à la roue (12) à freiner, alors qu'une force de traction est transmise par la barre de traction (9) avec un mécanisme de réajustage disposé dans la barre de traction (9), du côté de levier de freinage direct et latéralement par rapport à la roue (12), lequel mécanisme de réajustage réduit la distance entre les leviers de freinage en fonction de l'usure des sabots de frein (10, 11) et de la roue (12), afin de maintenir un jeu constant dans l'unité de freinage dans sa position de desserrage complet, le mécanisme de réajustage comportant deux éléments en forme de tiges (22, 24) déplaçables télescopiquement et dont l'une est une broche filetée (22) à filetage non-autobloquant, alors que l'autre est un tube (24) qui porte un écrou (23) susceptible d'être vissé sur la broche filetée (22), caractérisée par le fait que le mécanisme de réajustage est disposé essentiellement entre le levier direct (5) et la roue (12), que le levier direct (5) est fixé à une extrémité de tube (15) dont l'autre extrémité porte deux surfaces à épaulements (17, 18) susceptibles d'être accouplées, lesdites surfaces à épaulements étant susceptibles d'être accouplées, au choix, avec deux surfaces à épaulements correspondantes (19, 20) d'un flasque (21) relié rigidement à la broche filetée (22), que le tube qui porte l'écrou (23) s'étend dans le sens qui s'éloigne du flasque (21) et est relié, à l'extrémité éloignée du flasque (21), à la barre de traction (9), qu'un corps de butée mobile (13) est monté sur le tube (15) et entoure celui-ci dans une position axiale entre le levier de freinage direct (5) et le flasque (21), et que le corps de butée (13) est susceptible d'être amené en prise avec un corps (38) susceptible d'être déplacé axialement par la broche filetée (22) pour libérer un ressort (27, 28) qui déplace la broche filetée et le tube (24) dans cette direction axiale relative, de manière qu'intervienne un accroissement de sa longueur totale.

2. Installation de freinage selon la revendication 1, caractérisée par le fait que le cylindre (6) est fixé de façon rigide au levier de freinage (5), que le piston dans le cylindre (6) et la barre de traction (9) sont reliés à l'aide d'un levier (8) qui est articulé sur le levier de freinage (5), que l'extrémité du levier (8) reliée à articulation au levier de freinage (5) est reliée à articulation au tube (15) comportant les deux surfaces à épaulements (17, 18) susceptibles d'être acouplées, et que le corps de butée mobile (13) est en liaison rigide avec le levier direct (5).

0076334

Fig.1

Fig.2

7

Fig. 3